# EUROPEAN PATENT SPECIFICATION

(11) **EP 2 965 588 B1**
(45) Date of publication and mention of the grant of the patent: **10.04.2019**
(21) Application number: 14711639.6
(22) Date of filing: 26.02.2014
(51) Int. Cl.: H04W 36/00, H04W 76/00, H04W 36/28

(54) **HANDOFF PRIORITIZATION IN MULTI-RAB CALLS**
WEITERREICHUNGSPRIORISIERUNG IN MULTI-RAB-ANRUFEN
HIÉRARCHISATION DE TRANSFERT INTERCELLULAIRE DANS DES APPELS MULTI-RAB

(30) Priority: 06.03.2013 US 201313786734
(43) Date of publication of application: 13.01.2016
(73) Proprietor: Google Technology Holdings LLC, Mountain View, CA 94043 (US)
(72) Inventor: MORGAN, William K., Wauconda, Illinois 60084 (US); CHISU, Daniel C., Franklin Park, Illinois 60131 (US)
(74) Representative: Betten & Resch
(86) International application number: PCT/US2014/018475
(87) International publication number: WO 2014/137676

(56) References cited:
- US-A1- 2006 245 394
- US-A1- 2011 059 741
- US-A1- 2012 083 264
- US-A1- 2013 003 523

## Description

### TECHNICAL FIELD

This application relates to prioritizing the handoff functions of a mobile communication device also referred to as a User Equipment (UE). More particularly, embodiments described provide a system and method of delaying data connection messaging on a Dedicated Control Channel (DCCH) until after impending handoff messaging on the same DCCH is completed.

### BACKGROUND

Mobile communication devices (UEs) operating in a simultaneous voice and data communication mode have been found to drop ongoing calls more often than UEs operating only in a pure voice communication mode. A simultaneous voice and data communication on a UE communication is often referred to as a Multi-Radio Access Bearer communication (Multi-RAB) in a Universal Mobile Telecommunication System (UMTS) which includes Long Term Evolution (LTE) based UEs. Multi-RAB basically indicates that a UE can communicate both voice and data simultaneously on a wireless channel. It has been found that smartphones, as a group, drop more calls on the average than non-smartphones. It appears that since smartphones operate in multi-RAB mode on a regular or continuous basis, the increased signaling traffic associated with the setting up and tearing down data connections between the smartphone UE and a cell or base station may be a partial cause of the increased number of dropped calls by smartphones. The setting up and tearing down of data connections in a multi-RAB communication often involves large messages being passed between the UE and a base station. These large data related channel setup and break down messages often compete for signaling link resources that are also being used by messages associated with a handoff. The data connection messaging traffic on the signaling link sometimes results in handoff processing delays. The handoff processing delays thus, often result in dropped calls due to an incomplete or untimely handoff message signaling. This problem appears to be more prevalent in poor radio frequency (RF) environments where retransmissions of signaling messages are necessary. For example, any retransmission of a large signaling message, such as a data related radio access bearer reconfiguration message, can further delay handoff signal messaging since retransmission of a signaling message takes priority over new message transmission.

What is needed is system or method that prioritizes data connection and handoff signaling so that handoff signaling is not delayed due to data connection signaling when a potential handoff is imminent.

US 2012/083264 A1 discloses a method and apparatus for transport format selection in a mobile wireless communication device. During a simultaneous voice and data call, the mobile wireless communication device selects a transport format for proper uplink data transmission. Simultaneous voice and data calls require higher uplink transmit power than voice only calls. The mobile wireless communication device selects a transport format based on the uplink transmit power level. At higher transmit power levels, minimum or zero data rates are chosen to maintain sufficient power for simultaneous voice. Transmit format is specified using a transmit format combination indicator.

US 2013/003523 A1 discloses a system and method for addressing RLC unrecoverable errors experienced by User Equipment in a wireless network help the network to resolve the errors without shifting the User Equipment into an Idle mode and dropping voice calls. A measurement event provides the buffer occupancy and identifies the affected radio bearer to the network. If the state of the bearer is not changed, the User Equipment provides a Signaling Connection Release Indication message or a Radio Bearer Release Indication message to the network, the latter message identifying the radio bearer to be released without taking down the entire signaling connection for the domain.

The document US 2011/059741 A1 relates to methods and apparatus that facilitate predictive hard and soft handover are presented herein. A measurement component can measure signal strength data associated with a source cell and one or more target cells. One or more linear regression lines can be computed based on the signal strength data. Rates of at least one of an increase or a decrease in the signal strength data per unit of time can be determined based on a slope of the one or more linear regression lines-the slope can comprise a change in signal strength data per unit of time. A time to trigger at least one of a hard or soft handover can be triggered based on the rates.

Finally, the document US 2006/245394 A1 describes an apparatus and method that improves upon known handoff techniques, such as Mobile IP and Fast Mobile IP, to improve the mobility experience of an end user. OSI layer 2-originated indications of a handoff being imminent, a link down for handoff, and a new link up after handoff are introduced. These indications can be used by applications (such as real-time/streaming applications on the mobile to take suitable proactive measures prior to an actual handoff. Examples of such measures include the buffering of data to be used during the handoff interval in a way that improves the seamless mobility experience of the end user.

### BRIEF DESCRIPTION OF THE DRAWINGS

For a more complete understanding, reference is now made to the following description taken in conjunction with the accompanying Drawings in which:
Figs. 1A and 1B illustrate typical message signaling between a UE and a base station for a handoff and for setting up and breaking down a data connection, respectively;
Fig. 2 illustrates a high level block diagram of a UE in accordance with an embodiment;
Figs. 3A and 3B graphically illustrate signal strength v. time of various signals considered when predicting a handoff for a completed handoff and an aborted handoff, respectively; and
Figs 4A and 4B provide flow charts that illustrate the setting/clearing of an impending handoff flag and the use of the set/cleared impending handoff flag for delaying data connection messaging.

### DETAILED DESCRIPTION

The invention is defined in the independent claims. The dependent claims define embodiments of the invention.

Referring now to the drawings, wherein like reference numbers are used herein to designate like elements throughout, the various views and embodiments of a system and method of performing handoff prioritization in multi-RAB calls are illustrated and described. Other possible embodiments are also described. The figures are not necessarily drawn to scale, and in some instances the drawings have been exaggerated and/or simplified in places for illustrative purposes only. One of ordinary skill in the art will appreciate the many possible applications and variations based on the following examples of possible embodiments. The object of the invention is solved by the subject-matter of the independent claims. Preferred embodiments are defined in the dependent claims. The embodiments and/or examples of the following description which are not covered by the appended claims are considered as not being part of the present invention.

Embodiments described provide a system and method that prioritizes handoff signaling over data connection messaging so that handoff signaling is not delayed due to any data connection signaling when a handoff is imminent.

In one embodiment, a mobile communication device communication device that is configured to communicate in multi-RAB calls is provided. The mobile communication device has a transceiver configured to communicate with a base station. The mobile communication device also has a baseband processor connected to the transceiver. The baseband processor is configured to set an impending handoff flag when a neighboring cell strength of a neighboring cell exceeds an add cell event threshold for a predetermined initial percentage of a time to trigger time. The mobile communication device also has an application processor configured to delay the initiation of a data connection request when the impending handoff flag is set. The application processor can also allow initiation of a data connection request when the impending handoff flag is cleared.

In another embodiment of the mobile communication device, the baseband processor is further configured to initiate a handoff messaging flow with the base station when the neighboring cell strength exceed an add cell event threshold for the time to trigger time T.

In yet another embodiment of the mobile communication device, the baseband processor is further configured to clear the impending handoff flag (a) after a potential handoff with the neighboring cell is completed or (b) when the neighboring cell strength of the neighboring cell drops below the add cell event threshold prior to completion of the time to trigger time. Additionally, in various embodiments. The baseband process is further configured to clear the impending handoff flag (c) after an impending handoff timeout timer expires.

In yet another embodiment, of the mobile communication device, the application processor is further configured to communicate an initiation of the data connection request to the baseband processor and the baseband processor is configured to initiate a data connection messaging flow on a signaling link resource with a base station. Additionally, the application processor can be further configured to delay transmission of data connection break down messages for an existing data channel when the impending handoff flag is set and to allow transmission of data connection break down messages for the existing data channel when the impending handoff flag is cleared.

In some embodiments, a method prioritizing handoff messaging messages over data connection messages is provided. For example, for a UE configured for multi-RAB communication and comprising a baseband processor and an application processor, the method of prioritizing handoff messaging messages over data connection messaging messages on a signaling link includes measuring a reference cell strength of a reference cell by the baseband processor, wherein the reference cell is a cell included in an active set of cells in communication with the UE. The method further includes measuring a neighbor cell strength of a neighbor cell by the baseband processor of the UE. The method continues by initiating a handoff time to trigger timer when the neighbor cell strength is measured to be greater than an add cell event threshold. The method predicts, by the baseband processor prior to completion of the handoff time to trigger timer, that a potential handoff with the neighbor cell is imminent. When a potential handoff is imminent, then the baseband processor sets an impending handoff flag based on the predicted potential handoff. The method then includes delaying, by the application processor, of a request to open a data connection over a data channel for an application running on the application processor while the impending handoff flag is set. After the impending handoff flag is set, there is a potential for performing handoff messaging between the UE and a base station on the signaling link at least while the impending handoff flag is set. The method then includes clearing the impending handoff flag. The application processor is then able to request the data connection to be opened on the data channel when the impending handoff flag is cleared. The broadband processor can then initiate data connection messaging on the signaling link in response to the request by the application processor.

In another embodiment method is described for predicting of the potential handoff with the neighbor cell is imminent. The method further comprises determining that the neighbor cell strength is continuously greater than the add cell event threshold for an initial predetermined percentage of the time to trigger time. In an embodiment, the add cell event threshold is set at a predetermined offset below the measured reference cell strength.

In yet another embodiment method, the clearing of the impending handoff flag comprises clearing the impending handoff flag when the baseband processor measures that the reference cell signal strength goes below the add cell event threshold before completion of the handoff time to trigger timer. Alternatively, clearing of the impending handoff flag can occur when the UE completes the handoff with the neighboring cell. Furthermore, clearing of the impending handoff flag can occur after the UE initiates a handoff message on the signaling link and receives an active set update message from a base station. And, clearing the impending handoff flag can also occur after an impending handoff flag timer expires.

In one embodiment, a mobile communication device is configured for multi-RAB communications. The mobile communication device comprises a transceiver configured to communicate with a wireless network on a signaling link. The signaling link is a communication configured for communicating both handoff messaging and data connection messaging. The mobile communication device also includes a baseband processor that is connected to the transceiver. The baseband processor is configured to measure a reference cell strength of a reference cell. A reference cell is a cell that is in an active set of cells that are communication with the mobile communication device. The baseband processor is further configured to measure a neighbor cell strength of a neighbor cell to determine whether the neighbor cell strength is above an add cell event threshold. When the baseband processor determines that the neighbor cell strength is above the add cell event threshold, the baseband processor is configured to start a time to trigger timer. There is a handoff predictor block configured to set an impending handoff flag after the neighboring cell strength remains above the add cell event threshold for a continuous predetermined amount of the time to trigger timer. The impending handoff flag, when set, indicates that there is a high potential for handoff between the mobile device and the neighboring cell to be about to occur at the completion of the time to trigger timer. There is also an application processor configured to read whether the impending handoff flag is set or cleared. The application processor is further configured to delay a request for opening a data connection using data connection messaging for an amount of time from when the impending handoff flag is set.

In some embodiments, the handoff predictor block is configured to set the impending handoff flag after the neighboring cell strength remains above the add cell event threshold for a continuous predetermined amount of the time to trigger timer.

In yet other embodiments, the add cell event threshold is set at a predetermined offset that is below the reference cell strength.

In yet other embodiments, the amount of time from when the impending handoff flag is set, such that the application processor delays a request for opening a data connection, is an amount of time between when the impending handoff flag is set and cleared.

In still yet other embodiments, the amount of time from when the impending handoff flag is set and cleared is equal to the amount of time from when the impending handoff flag is set to a time when the potential handoff with the neighboring cell is completed using handoff messaging over the signaling link.

In another embodiment, the amount of time from when the impending handoff flag is set and cleared is equal to the amount of time from when the impending handoff flag is set to a time when the neighboring cell strength drops below the add cell event threshold prior to the completion of the time to trigger timer.

Multi-RAB is a term used to describe a UE smartphone that has at least two active connections (RABs - Radio Access Bearers) simultaneously. A multi-RAB call can be a call having a combination of voice and data information being communicated to/from a single UE. Multi-RAB is used in a Universal Mobile Telecommunication System (UMTS), which includes Long Term Evolution (LTE) phones, smartphones and other wireless communication devices, herein also referred to as UEs.

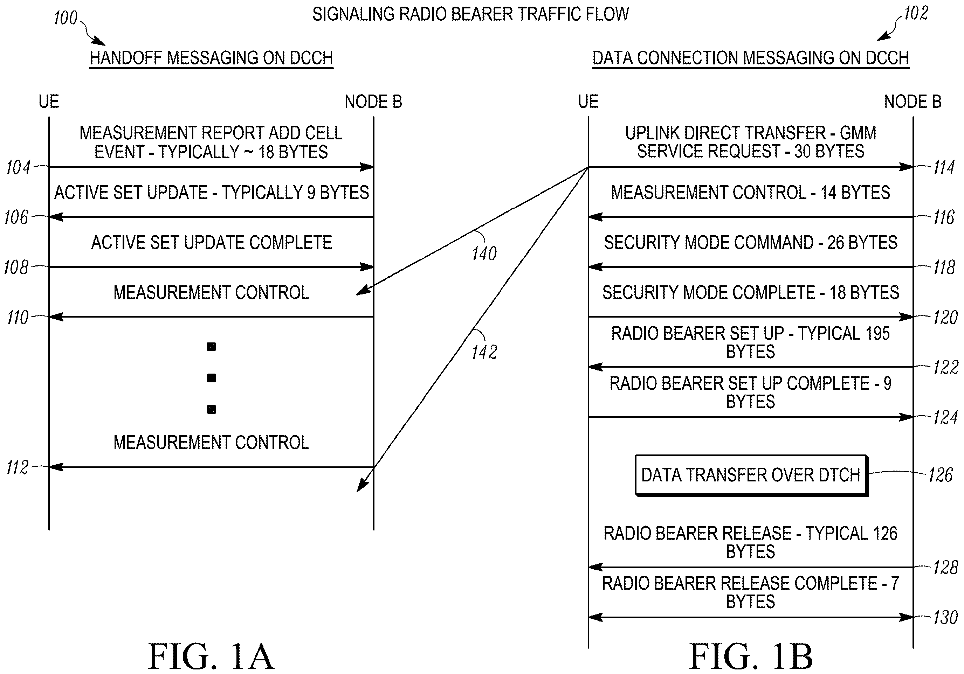

In a multi-RAB environment, handoff messaging and data connection messaging between a UE and a base station are provided asynchronously on a same signaling link, which for UMTS is the Dedicated Control Channel (DCCH). For example in Fig 1A, a typical handoff messaging flow 100 is shown while in Fig. 1B a typical data connection messaging flow 102 is shown. Both the handoff messaging 100 and the data connection messaging 102 may occur asynchronously in time between a UE and a base station. Referring first to Fig. 1A, a measurement report add cell event 104 is sent from a UE to a base station indicating that there appears to be another cell (a neighboring cell) providing a strong signal to the UE. Here, a typical add cell 1A event is shown, but is understood that in various embodiments a 1C or ID cell event can be interchanged with the 1A event handoff messaging flow depicted. The neighbor cell's strong signal may be or become stronger than the signal from a reference cell to which the UE is presently communicating. The measurement report communication 104 may be referred to as an add cell event communication (or a 1A event communication) and is typically about 18 bytes long. The add cell event communication 104 is typically the first of a series of handoff messages.

The base station responds with an active set update message 106, which includes the active set of cells that the UE is to use. This active set of cells may include the new cell, from which the newly reported strong neighbor signal is coming from as reported by the UE. In essence the active set update message 106 is telling the UE to add and/or use the neighbor cell (the other cell) that the UE just reported to the base station. In other words, the base station is informing the UE to prepare for a handoff that will add the newly reported stronger signaled neighboring cell. An active set update message 106 is typically around 9 bytes long. The UE responds with an active set update complete message 108 indicating that the UE acknowledges receipt of the active set update message 106 and in various embodiments, the handoff messaging is considered complete or substantially complete.

At this time, the base station will send to the UE multiple measurement control messages 110, 112. The measurement control messages 110, 112 define for the UE how to provide measurement status and related information about the cell(s) it is communicating with to the base station. Measurement control messages may also update a neighboring cell list, change intra-frequency handoff parameters and/or change inter frequency control parameters associated with the active set cells and UE communication channels.

After the measurement control messages 110, 112 are received by the UE, the UE is ready perform and/or complete the handoff to the newly found neighboring cell with the seemingly stronger signal strength. In this example, the UE may be performing a typical add cell type handoff, which is being explained herein so as to not overly complicate the description with details that are not necessary for understanding the various embodiments. As such, Fig. 1A is a handoff messaging flow example for a UMTS event 1A, which is a simple handoff add of a cell situation, but the same conceptual steps occur or apply to other types of handoff events such as 1C and 1D events.

Referring now to Fig. 1B, a data connection messaging flow 102 between the UE and the base station is shown. This data connection message flow 102 provides the basics of setting up a data connection, transferring the data and then breaking down the data connection when the data transfer is completed between a UE and a base station. Generally, a data connection may be created anytime an application, such as a text message, application update, picture, video or other non-voice data communication is to be performed from or to the UE. For example, an application running in the background on the UE may request an update from an internet URL from time to time (i.e., a Facebook®, Tumblr®, game application, weather or other application running in the background or foreground on a smartphone). When such a data connection is needed (in this example when an uplink of data from the UE toward the base station is needed) the UE initiates the data connection by sending an uplink direct transfer 114 message in the form of a GMM service request. A GMM service request, which is short for General packet radio service Mobility Management service request, indicates that an application layer of the UE wants to initiate a data session. An application running in the application layer wants to upload some data using the application processor in the UE. An uplink direct transfer message 114 of this type is comparatively a fairly large message of about 30 bytes. The base station responds to the GMM service request 114 with a measurement control message 116, which provides some definitions and parameters for how the data transfer is to be set up along with an indication as to how the data parameters and data threshold parameters are to be set for the data transfer. This measurement control message may be around 14 bytes long. In this example, the base station provides a security mode command 118 of about 26 bytes to the UE to which the UE will respond with a security mode complete message 120 of about 18 bytes. The security code command is related to encryption of the data that is to be sent.

Next the base station sends a radio bearer set up message 122 to the UE. The radio bearer set up message 122 is considered a large message of typically about 195 bytes. The radio bearer set up message 122 provides instruction parameters defining the size and some format information for the data load based on the data comprising information about, a picture, video, Facebook ® status update, text message or substantially any other data structure that is about to be uploaded from the UE. The UE, after receipt of and use of the radio bearer set up message 122, responds to the base station with a radio bearer set up complete message 124 indicating that the UE is all set up and ready to send the data over a designated Data Channel (DTCH).

The data connection messages 114-124 are considered data connection setup messages, which are used to request and setup a data channel or complete a data socket request from the UE's application layer.

The data is then transferred 126 over the designated DTCH from the UE to the base station. The size or the amount of the data being transferred is not of importance here because the data is being transferred over a data channel (DTCH) and not over the Dedicated Control Channel (DCCH) that is used for both handoff messaging 100 and the data connection messaging 102.

When the data transfer is completed (i.e., all the data is uploaded from the UE to the base station in this example) the base station sends a radio bearer release message 128 instructing the UE to release the data channel and break down the data connection between the UE and the base station. After the UE breaks down and closes the data connection, a radio bearer release complete message 130 is sent by the UE to the base station on the DCCH channel indicating an end to the data connection.

The data connection messages 128, 130 are considered data connection break down messages, when are used to break down, close and disconnect a data channel or socket.

Since both the handoff messaging flow 100 and the data connection messaging flow 102 use the DCCH, a dropped call can occur if a data connection is requested or initiated by the UE's application processor at or about the same time that a handoff messaging flow 100 is commencing or in process. The dropped call may occur due to the data channel messaging set up or break down consuming too much time such that the handoff messaging flow 100 is delayed passed an amount of time that the handoff messaging should have either made or aborted the handoff. The unwanted result being a higher potential or probability for dropping the call due to the delay of one or more messages necessary in the handoff messaging signaling flow 100.

In one embodiment, an impeding handoff prediction flag, trigger or signal is created when a handoff event seems imminent. The handoff prediction signal is used by embodiments to delay the data connection setup or data connection breakdown messages (i.e., the initiation and/or completion of data transfers by the application layer) for the purpose of allowing the DCCH signaling channel to be available for priority handoff messaging. Once a data transfer is underway, it is not a problem for the handoff messaging flow because the data transfer is performed on the DTCH, which is not used for handoff messaging. Only data connection messaging associated with setting up and tearing down of a data channel are in competition for the limited signaling link resources that are also needed for handoff messaging.

In embodiments, the impeding handoff signal is generated after the signal strength from a neighboring cell is above a predetermined threshold signal strength level for a predetermined amount of time. The impeding handoff signal is used to delay the application layer or application processor from requesting or being able to request the creation of a data socket or data connection on the DCCH or in the alternative, if a data connection already exists, for the UE or application processor to delay the completion of a data transfer and thereby delay a request to release or breakdown of an existing data connection until after the handoff messaging is completed. The delaying of the application layer results in the delay of the actual creation of an associated data connection setup and/or tear down message signaling 102 thereby prioritizing the handoff messaging flow. The application layer is thereby stopped from initiating a data connection via data connection messaging, which provides additional signaling link resource bandwidth of the DCCH while the handoff messaging is occurring. In various embodiments, the application processor initiates a request to create a data connection to the baseband processor. Then, the baseband processor is responsible for initiating the data connection messaging on the DCCH.

In some embodiments, when lower layers in the baseband processor sense that a handoff is highly probable, the application layer is notified, for example via a handoff prediction signal or flag, to delay data processing by several hundred milliseconds to allow the handoff messaging to complete without any additional DCCH signaling link resource competition from data connection messaging on the over the air communication channel or link.

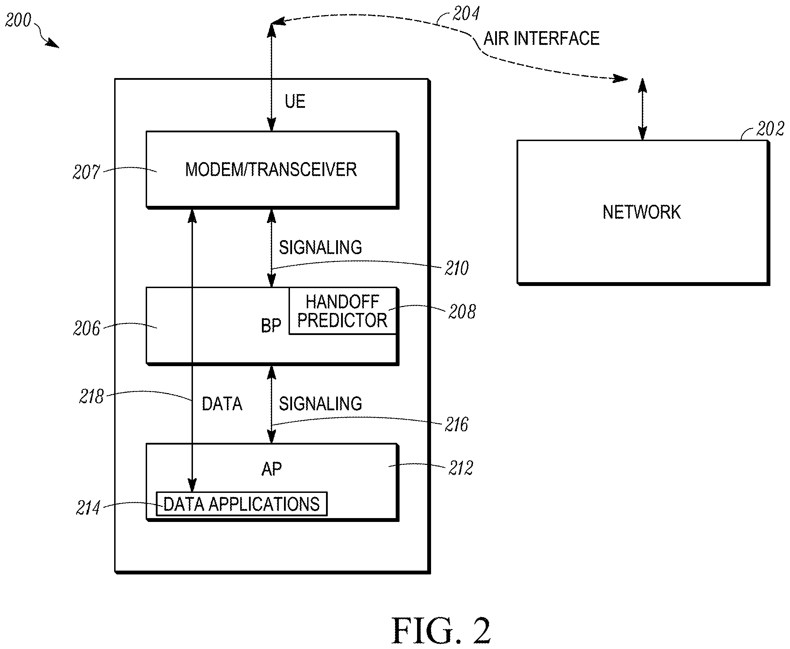

In Fig. 2 a high level block diagram of an exemplary UE or smartphone 200 is depicted as being connected to a connection network 202 via a wireless or air interface 204. The UE 200 includes a baseband processor 206, which is responsible, for among other things, lower level control of the functions of the UE 200. Such lower level functions may include overall control of the transceiver 207, boot up, and basic operation system function the mobile device. Within or closely associated with the baseband processor 206 is a handoff predictor block 208. The handoff predictor block 208 may be implemented via hardware, software or a combination of both. The handoff predictor 208, in conjunction with the baseband processor 206, is configured to analyze the signal strength from cells from which the transceiver 207 is receiving signals. A UE transceiver 207 may be in substantially simultaneous communication with more than one cell at a time. The cells that the UE is actively communicating with are considered part of the UE's active set of cells. Additionally, the transceiver 207 is receiving and the baseband processor 206 always considering potential or alternative cells to connect with and add to the active set of cells based on the new or alternative cell's signal being received at or above a threshold signal strength.

The handoff predictor 208 and/or the baseband processor 206 measures how long the signal strength received from a neighboring or alternative cell remains above an initial predetermined strength threshold (also referred to as the add cell event threshold). The handoff predictor 208 predicts whether a potential handoff, which will add the neighboring or alternative cell to the active set of cell, will occur based, in part, on the amount of time that the signal strength from the neighboring cell is above the initial predetermined threshold. The handoff predictor block 208 is not necessarily concerned about when or whether a cell in the existing active set of cells is going to be dropped, but instead focused on whether there is a high probability that a cell is about to or may be added to the active set. When the handoff predictor block 208 predicts that a handoff has a high probability of occurring, then the handoff predictor block sets or provides an impeding handoff signal or flag, which indicates that an impending handoff may occur. If the impending handoff does actually occur, then handoff messaging on the DCCH occurs and the potential cell is added to the active set of cells used by the UE 200.

In embodiments when the impeding handoff signal or flag is set, it is used to hold off the application processor 212 from initializing or breaking down (i.e., terminating) a data connection on the DCCH. As such, the handoff predictor block 208 is configured to predict and set an impeding handoff signal just prior to the initialization of handoff messaging 100, for example, prior to an add cell (i.e., 1A event) measurement report 104.

The transceiver signaling link 210 allows signaling between the transceiver 207 and the baseband processor 206. Thus, the transceiver signaling link 210 enables control of the transceiver 207 by the baseband processor 206. Additionally, signal strength data, cell identification information, frequency, data block size, voice and data modulation frequency settings, channels and other information can be shared or provided between the transceiver 207 and the baseband processor 206. The baseband processor 206 can also initialize and provide instructions to the transceiver that initialize both handoff messaging and/or data connection messaging.

The application processor 212 is a processor or processor block that, among other things, is responsible for processing various UE user related, upper level, applications. Such applications may be resident or have been downloaded and enabled on the UE. These applications may include, but are not limited to, various smartphone applications such as searches, navigation applications, weather applications, game applications, video and camera related applications and many other applications that may run in the foreground or background of a smartphone for the benefit of the UE user, service provider or a third party entity. Many of the applications resident on the UE request or produce data that may be ultimately received or transmitted over the wireless network 204. These applications are considered data applications 214 and are run or processed by the application processor 212. When the application processor 212 determines that a data application requires updating or a data transfer, the application processor 212 may initialize a data connection messaging request. To initialize or request a data connection, the application processor 212 may send a request data connection signal or socket request via an internal signaling link 216 to the baseband processor 206. The baseband processor 206 may then initialize data connection messaging with a data mobility management message 114 that is provided to the transceiver 207 via the transceiver signaling link 210. When the data connection is established between the UE and the base station, data to be transferred from or to the UE over the established DTCH is provided between the data applications storage 214 and the transceiver 207 on the data bus 218.

In some embodiments, when the data prediction block 208 determines that there is a high probability of a handoff and sets the impeding handoff flag or signal, the impeding handoff signal is communicated to the application processor 212 on the internal signaling link. The application processor 212 responds to a set impeding handoff signal by delaying any request for an initialization of a data connection or socket. By delaying the initialization of a data connection, there will be a delay in the application processor informing the base band processor 206, via the internal signaling link 216, that a data connection initialization is requested, which will result in the baseband processor delaying the creation and sending of a data mobility management (e.g., GMM service request) message 114 over the DCCH via the transceiver 207. As such, any handoff messaging that may occur over the next several hundred microseconds on the DCCH will not be delayed by the large byte contents of a data connection message. Thus, the potential handoff will have a lower probability of failing or resulting in a dropped call.

Referring back to Figs. 1A and 1B, there are two delay arrows 140 and 142. The first delay arrow 140 indicates an embodiment wherein upon the setting of the impeding handoff signal, a first data connection messaging message, of the plurality of data messaging messages, is delayed at least a first predetermined number of milliseconds to a time after the active set update message 108 of the handoff messaging flow 100 occurs. In yet another embodiment, the second delay arrow 142 indicates that after the setting of the handoff prediction signal, the first data connection messaging message, of the plurality of data messaging messages, is delayed at least a second predetermined number of milliseconds to a time after the measurement control messages 110, 112 of the handoff message flow 100 may occur.

Embodiments predict a potential handoff event, and then based on the prediction, delay the initialization of a data connection messaging flow 102 until after the hand handoff occurs. In other embodiments, the data connection messaging flow 102 is delayed until after a time to trigger an add cell event can be completed. A "time to trigger" an add cell event is a network defined amount of time that starts when the signal strength of a neighboring cell goes above a predetermined threshold (e.g., the add cell event threshold) and stays above the predetermined threshold for a predetermined amount of time. Example time to trigger times may range from about 100 to about 400 milliseconds on various communication networks.

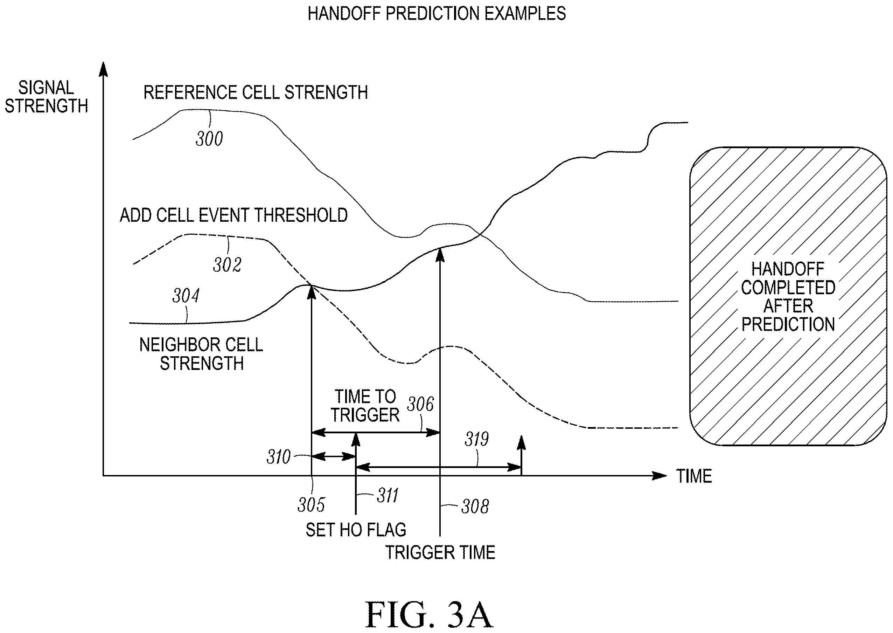

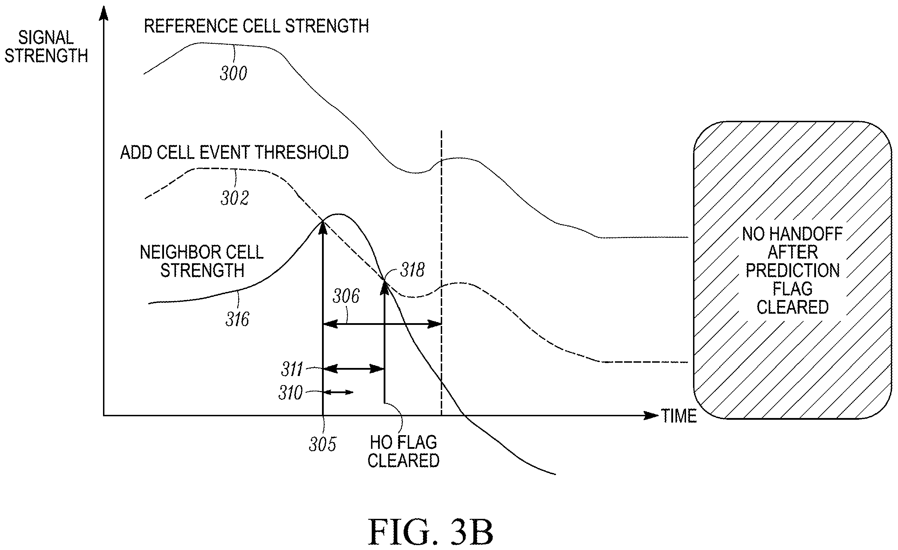

Fig. 3A depicts a signal strength graph of a handoff prediction event wherein a handoff occurs. Fig. 3B depicts a signal strength graph of a handoff prediction event wherein the handoff does not occur in accordance with embodiments. In Fig. 3A, a UE is in communication with a base station via a reference cell. The reference cell's signal strength 300, as received by the UE, is shown. Parallel to and at a predetermined offset below the reference signal's strength 300 is an add cell event threshold 302. The signal strength offset amount of the add cell event threshold 302 below the reference signal's strength 300 is typically predetermined and/or provided by the communication network carrier.

Another cell or neighbor cell's signal strength 304 is also shown. The UE may be monitoring the neighbor cell strength 304. The neighbor cell is not presently one of the cells, like the reference cell, that is included in the UE's active set of cells. In Fig. 3A one may assume that the UE is a mobile UE and that it is moving. As the UE moves, over time the reference cell strength 300 is decreasing, perhaps due to the UE moving farther away from the reference cell. The neighbor cell strength 304, over time, is increasing perhaps due to the UE moving closer to the neighboring cell. At a crossing point 305 in time, the neighbor cell strength 304 crosses add cell event threshold line 302.

When the neighbor cell strength 304, as received by the UE, (1) crosses 305 above add cell event threshold 302 and (2) remains above the add cell event threshold for an amount of time referred to as the time to trigger 306, then the UE will be "triggered" to generate a measurement report add cell event 104 handoff message (see Fig. 1A) at the trigger time 308. The time to trigger 306 is usually predetermined and/or provided to the UE by the communication network carrier.

In one embodiment, when the neighbor cell strength 304 remains above the add cell event threshold 302, then at a predetermined amount or percent of time 310 into the time to trigger 306 the handoff predictor associated with the UE's baseband processor will set the impeding handoff flag 311 to indicate that there is a high probability that a handoff is imminent. In embodiments, the amount of time or percent of time 310 into the time to trigger 306 may range from about 10% to about 70% of the time to trigger 306. In other words, setting of the impeding handoff flag may occur at a predetermined initial percentage of the time to trigger 310.

The impeding handoff flag is set prior to the trigger time 308, which is when an impeding handoff messaging flow 100 commences. By setting the impeding handoff flag prior to the trigger time, the UE can stop or delay the initiation of any data connection messaging on the DCCH channel.

The impeding handoff flag remains set until it is cleared. The handoff flag can be cleared (A) after a handoff is completed (1) after an active set update message 108 is received by the UE, or (2) after the measurement control messages 110, 112 are received by the UE (i.e., after the entire handoff message flow 100 is complete). An impeding handoff flag may also be cleared (B) after an impeding handoff timer 319 expires, or (C) referring to Fig. 3B, if the neighbor signal strength 316 drops below add cell the event threshold 302 before the time to trigger 306 expires as shown at point 318.

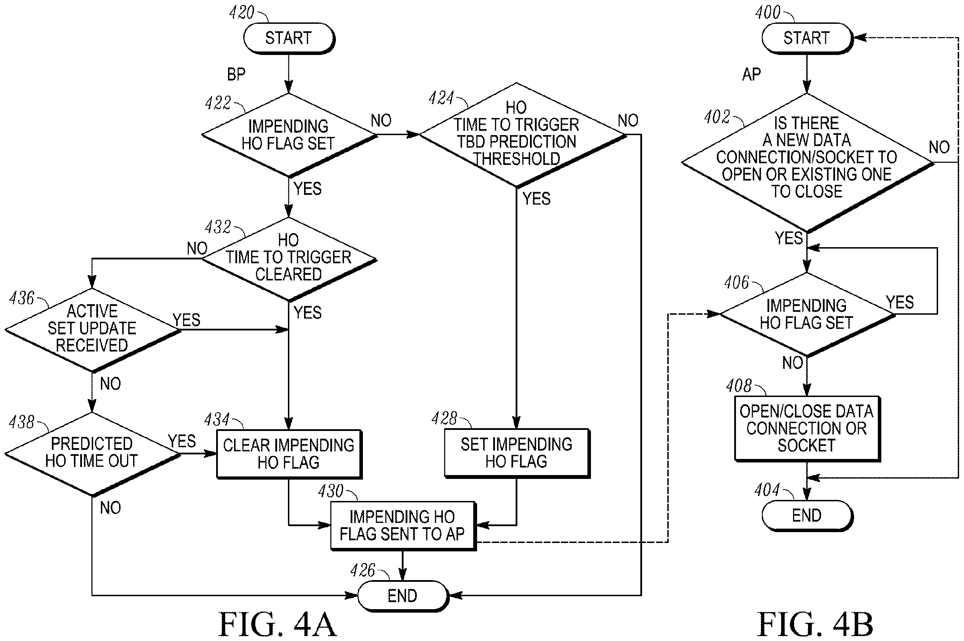

Figs. 4A and 4B are flow charts indicating the operation of the handoff predictor block 208 in the baseband processor 206 and the application processor 212 respectively with respect to the setting and responding to the setting of an impeding handoff flag. Figs. 4A and 4B are best understood in conjunction with all the previously discussed Figures.

In Fig 4B at step 400 the application processor 212 begins the process. At step 402 the application processor 212 makes a determination as to whether there is a need for a new data connection (or data socket) to be created or opened so that application data can be sent or received on a data channel (DTCH). Also in step 402, the application processor is making a determination as to whether there is already an existing data connection (or data socket) that is ready or nearly ready to be closed. If there is no need to open a new data connection or close an already existing data channel, the process is compete and goes to the end 404 or in some embodiments loops back to the start 400 as indicated by the dotted line in the flow chart.

If at step 402, the application processor 212 determines that either a new data connection needs to be established or that an already existing data connection is ready to be closed, then at step 406, the application processor 212 checks if there is an impending handoff flag set. In this embodiment when the impending handoff flag is set, the application processor will loop back and continue to check to see if the impending handoff flag is set. The looping back and waiting for the impending handoff flag to no longer be set delays the data connection messaging process for as long as the impending handoff flag is set. When the impending handoff flag is no longer set, then at step 408, the application processor requests to open or close the data connection as determined in step 402. The opening or closing of the data connection (or socket) may involve the application processor requesting that the baseband processor initiate a data connection request on the DCCH. For example, as shown in Fig. 1B, if a new data connection is to be opened then, a GMM service request message 114 may be transmitted from the UE to the base station. Alternatively, if a data connection is ready to be closed, the application processor may complete the data transfer over the DTCH so that the base station will send a radio bearer release message 128 or the UE may send another type of data connection message requesting that the data connection be released and closed (not specifically shown in Fig. 1B). It is important to note that if a data connection already exists, but is not ready to be closed, then it does not matter in impending handoff flag is set because an existing data connection is using the DTCH and is therefore not competing for signaling link resources on the DCCH.

The dotted line 410 extending from Fig. 4A to Fig. 4B represent the internal signaling connection between the baseband processor and the application processor that enables the application processor to sense whether the impending handoff flag is set or cleared.

Referring to Fig. 4A, at step 420 the process starts. At step 422, the baseband processor 206 checks to determine whether an impending handoff flag is already set. Assuming for a moment that, as shown in Fig. 3A, the neighbor cell strength 304 has crossed the add cell event threshold 302 at the crossing point 305 and no handoff flag has been set, then at step 424 it is determined whether the predetermined initial percentage of the time to trigger 310 has passed. If the predetermined initial percentage of the time to trigger 310 has not passed, then the process completes at step 426 so it can loop back to the start 420 again. Conversely, if the predetermined initial percentage of the time to trigger 310 has passed then at step 428, the handoff flag is set by the handoff predictor block associated with the baseband processor. Then at step 430, the status of the impending handoff flag is sent to the application processor as indicated by the dotted line 410.

Back at step 422, if an impeding handoff flag is found to already be set, then at step 432, it is determined whether the handoff time to trigger is cleared due to, for example, as shown in Fig. 3B the neighbor cell strength 316 dropped below the add cell event threshold 302 at point 318, which will result in the baseband processor clearing the handoff flag. Thus, at step 434, the baseband processor clears the impending handoff flag.

Back at step 432, if the handoff time to trigger is not in need of being cleared because the neighbor cell strength 304 remains above the add cell event threshold 302 after the crossing point 305, then at step 436, the baseband processor determine whether the handoff has been completed based on whether an active set update message has been received by the UE from the base station. If an active set update message was received then at step 434 the impending handoff flag is cleared.

Going back to step 436, if an active set update was not received by the baseband processor, then at step 438 the baseband processor determines whether the an amount of time has passed since the impeding handoff flag was set such that the set impeding handoff flag should timeout and be cleared due to, for example, the base station not responding to the UE's handoff messaging flow. If the impeding handoff timeout time period has not expired, then the process completes at step 426 so it can loop back to the start 420 again. Conversely, if at step 438 the impeding handoff timeout time has expired, then the process proceeds to step 434 where the impending handoff flag is cleared.

After the handoff flag is cleared at step 434, the status of the handoff flag is sent to the application processor at step 430 (as indicted by dotted line 410). The process then completes at step 426 so it can loop back to the start 420 again.

Handoff messaging and evolved high speed packet access (HSPA+) data connection messaging are both sent on the same signaling link (for example the DCCH) and compete with each other for signaling link resources. Both handoff messaging and HSPA+ data connection messages occur asynchronously with respect to each other. It has been found that handoff messaging should be prioritized over the data connection messaging since a missed handoff can result in a dropped call.

Without use of the various embodiments disclosed herein, the data connection messages, especially the large RAB (radio access bearer) setup or release messages, which occur at the start and at the end of data transfers, can delay handoff messaging flow. Additionally in poor RF (radio frequency) environments the data messaging messages, which can be relatively long when compared with handoff messages, sometimes must be retransmitted. Since retransmissions have priority over all other messages, the retransmitted data connection messages further delay handoff messages (such as the active set update message) from arriving at the EU in time so that the call is not dropped.

Embodiments described provide an ability for a UE to predict an impeding handoff event and delay the start of a data connection message flow for enough time so that the handoff event can complete, abort or timeout without competing for signaling link resources. After the handoff has completed, aborted or timed out, the delayed data connection message flow is allowed to proceed. In other words, embodiments described set an impending handoff flag based on an add cell threshold being met and prior to commencement of an actual handoff messaging flow over the DCCH. Additionally, in embodiments, the application processor may in some cases be able to control the closing of a data connection or socket so as to delay the radio bearer release message if a data session was already underway and close to finishing when an impending handoff flag is set.

It will be appreciated by those skilled in the art having the benefit of this disclosure that this handoff prioritization in multi-RAB calls provides a method and apparatus configured to make a handoff prediction that can be used as a trigger to delay the initialization and or ending of data transfers at the application layer for the purpose of keeping the signaling link open for handoff messaging. It should be understood that the drawings and detailed description herein are to be regarded in an illustrative rather than a restrictive manner, and are not intended to be limiting to the particular forms and examples disclosed. On the contrary, included are any further modifications, changes, rearrangements, substitutions, alternatives, design choices, and embodiments apparent to those of ordinary skill in the art, as defined by the following claims. Thus, it is intended that the following claims be interpreted to embrace all such further modifications, changes, rearrangements, substitutions, alternatives, design choices, and embodiments.

## Claims

1. A mobile communication device configured to prioritize handoff messaging messages over data connection messaging messages on a signaling link for the mobile communication device, and configured to communicate in multi-RAB calls, wherein the data connection messaging and the handoff messaging use a dedicated control channel, DCCH, the mobile communication device comprising:
a transceiver (207) configured to communicate with a base station;
a baseband processor (206) connected to the transceiver, the baseband processor configured to set an impending handoff flag when a neighboring cell strength of a neighboring cell exceeds an add cell event threshold (302) for a predetermined initial percentage of a time to trigger time (306);
an application processor (212) configured to delay initiation of a data connection request on the signaling link when the impending handoff flag is set and to allow initiation of a data connection request when the impending handoff flag is cleared.

2. The mobile communication device of claim 1, wherein the baseband processor is further configured to initiate a handoff messaging flow (100) with the base station when the neighboring cell strength exceed an add cell event threshold for the time to trigger time.

3. The mobile communication device of claim 1, wherein the baseband processor is configured to clear the impending handoff flag (a) after a potential handoff with the neighboring cell is completed or (b) when the neighboring cell strength of the neighboring cell drops below the add cell event threshold prior to completion of the time to trigger time.

4. The mobile communication device of claim 1, wherein the application processor is configured to communicate an initiation of the data connection request to the baseband processor and the baseband processor is configured to initiate a data connection messaging flow on a signaling link resource with a base station.

5. The mobile communication device of claim 1, wherein the application processor is further configured to delay transmission of data connection break down messages for an existing data channel when the impending handoff flag is set and to allow transmission of data connection break down messages for the existing data channel when the impending handoff flag is cleared.

6. The mobile communication device of claim 1, wherein:
the transceiver is further configured to communicate with a wireless network on a signaling link, the signaling link configured for communicating both handoff messaging and data connection messaging;
the baseband processor is further configured to measure a reference cell strength (300) of a reference cell, the reference cell being a cell in an active set of cells in communication with the mobile communication device; the baseband processor further configured to measure the neighbor cell strength of the neighbor cell to determine whether the neighbor cell strength is above the add cell event threshold,
when the baseband processor determines that the neighbor cell strength is above the add cell event threshold, the baseband processor is configured to start a time to trigger timer;
a handoff predictor block is configured to set the impending handoff flag after the neighboring cell strength remains above the add cell event threshold for a continuous predetermined amount of the time to trigger timer, the impending handoff flag being indicative of a potential handoff between the mobile device and the neighboring cell may be about to occur at the completion of the time to trigger timer;
the application processor is further configured to read whether the impending handoff flag is set or cleared, the application processor further configured to delay a request for opening a data connection using data connection messaging for an amount of time from when the impending handoff flag is set.

7. The mobile communication device of claim 6, wherein the continuous predetermined amount of time is a predetermined percentage of the time to trigger time.

8. The mobile communication device of claim 6, wherein the add cell event threshold is set at a predetermined offset below the reference cell strength.

9. The mobile communication device of claim 6, wherein the amount of time from when the impending handoff flag is set such that the application processor delays a request for opening a data connection is an amount of time between when the impending handoff flag is set and cleared.

10. A method of prioritizing handoff messaging messages over data connection messaging messages on a signaling link for a UE configured for multi-RAB communication and comprising a baseband processor (206) and an application processor (212), wherein the data connection messaging and the handoff messaging use a dedicated control channel, DCCH, the method comprising:
measuring a reference cell strength of a reference cell by the baseband processor, the reference cell being a cell in an active set of cells in communication with the UE;
measuring a neighbor cell strength of a neighbor cell by the baseband processor;
initiating a handoff time to trigger timer when the neighbor cell strength is measured to be greater than an add cell event threshold;
predicting, by the baseband processor prior to completion of the handoff time to trigger timer, a potential handoff with the neighbor cell is imminent;
setting an impending handoff flag based on the predicted potential handoff;
delaying, by the application processor, a data connection request on the signaling link to open a data connection over a data channel for an application running on the application processor while the impending handoff flag is set;
potentially performing handoff messaging between the UE and a base station on the signaling link while the impending handoff flag is set;
clearing the impending handoff flag;
requesting by the application processor, a request to open the data connection on the data channel when the impending handoff flag is cleared;
initiating, by the broadband processor, data connection messaging on the signaling link in response to the request by the application processor.

11. The method of claim 10, wherein predicting the potential handoff with the neighbor cell is imminent further comprises:
determining that the neighbor cell strength is continuously greater than the add cell event threshold for an initial predetermined percentage of the time to trigger time.

12. The method of claim 10, wherein clearing the impending handoff flag comprises clearing the impending handoff flag when the baseband processor measures that the reference cell signal strength goes below the add cell event threshold before completion of the handoff time to trigger timer.

13. The method of claim 10, wherein clearing the impending handoff flag comprises clearing the impending handoff flag when the UE completes the handoff with the neighboring cell.

14. The method of claim 10, wherein clearing the impending handoff flag comprises clearing the impending handoff flag after the UE initiates a handoff message on the signaling link and receives an active set update message from a base station.

15. The method of claim 10, wherein clearing the impending handoff flag comprises clearing the impending handoff flag after an impending handoff flag timer expires.

## Patentansprüche

1. Mobile Kommunikationsvorrichtung, die konfiguriert ist, um Übergabebenachrichtigungsnachrichten gegenüber Datenverbindungsbenachrichtigungsnachrichten auf einer Signalisierungsverbindung für die mobile Kommunikationsvorrichtung zu priorisieren, und konfiguriert ist, um in Multi-RAB-Aufrufen zu kommunizieren, wobei die Datenverbindungsbenachrichtigung und die Übergabebenachrichtigung einen bestimmten Steuerkanal, DCCH, verwenden,
wobei die mobile Kommunikationsvorrichtung umfasst:
einen Transceiver (207), der konfiguriert ist, um mit einer Basisstation zu kommunizieren;
einen Basisbandprozessor (206), der mit dem Transceiver verbunden ist, wobei der Basisbandprozessor konfiguriert ist, um ein Flag für eine bevorstehende Übergabe zu setzen, wenn eine Nachbarzellenstärke einer Nachbarzelle eine Schwelle für ein Ereignis eines Hinzufügens einer Zelle (302) für einen vorbestimmten anfänglichen Prozentsatz einer Zeit, um eine Zeit (306) zu triggern, übersteigt;
einen Anwendungsprozessor (212), der konfiguriert ist, um eine Initiierung einer Datenverbindungsanfrage auf der Signalisierungsverbindung zu verzögern, wenn das Flag für eine bevorstehende Übergabe gesetzt ist, und um eine Initiierung einer Datenverbindungsanfrage zuzulassen, wenn das Flag für eine bevorstehende Übergabe gelöscht.

2. Mobile Kommunikationsvorrichtung nach Anspruch 1, wobei der Basisbandprozessor weiterhin konfiguriert ist, um einen Übergabebenachrichtigungsfluss (100) mit der Basisstation zu initiieren, wenn die Nachbarzellenstärke eine Schwelle für ein Ereignis eines Hinzufügens einer Zelle für die Zeit, um eine Zeit zu triggern, übersteigt.

3. Mobile Kommunikationsvorrichtung nach Anspruch 1, wobei der Basisbandprozessor konfiguriert ist, um das Flag für eine bevorstehende Übergabe zu löschen, (a) nachdem eine potentielle Übergabe mit der Nachbarzelle beendet ist oder (b) wenn die Nachbarzellenstärke für die Nachbarzelle vor einer Beendigung der Zeit, um eine Zeit zu triggern, unter die Schwelle für ein Ereignis eines Hinzufügens einer Zelle abfällt.

4. Mobile Kommunikationsvorrichtung nach Anspruch 1, wobei der Anwendungsprozessor konfiguriert ist, um eine Initiierung der Datenverbindungsanfrage zum Basisbandprozessor zu kommunizieren, und der Basisbandprozessor konfiguriert ist, um einen Datenverbindungsbenachrichtigungsfluss auf einer Signalisierungsverbindungsressource mit einer Basisstation zu initiieren.

5. Mobile Kommunikationsvorrichtung nach Anspruch 1, wobei der Anwendungsprozessor weiterhin konfiguriert ist, um eine Übertragung von Datenverbindungsabbruchnachrichten für einen existierenden Datenkanal zu verzögern, wenn das Flag für eine bevorstehende Übergabe gesetzt ist, und um eine Übertragung von Datenverbindungsabbruchnachrichten für den existierenden Datenkanal zuzulassen, wenn das Flag für eine bevorstehende Übergabe gelöscht ist.

6. Mobile Kommunikationsvorrichtung nach Anspruch 1, wobei:
der Transceiver weiterhin konfiguriert ist, um mit einem drahtlosen Netzwerk auf einer Signalisierungsverbindung zu kommunizieren, wobei die Signalisierungsverbindung zum Kommunizieren sowohl einer Übergabebenachrichtigung als auch einer Datenverbindungsbenachrichtigung konfiguriert ist;
der Basisbandprozessor weiterhin konfiguriert ist, um eine Referenzzellenstärke (300) einer Referenzzelle zu messen, wobei die Referenzzelle eine Zelle in einer aktiven Gruppe von Zellen in Kommunikation mit der mobilen Kommunikationsvorrichtung ist; wobei der Basisbandprozessor weiterhin konfiguriert ist, um die Nachbarzellenstärke der Nachbarzelle zu messen, um zu bestimmen, ob die Nachbarzellenstärke über der Schwelle für ein Ereignis eines Hinzufügens einer Zelle ist,
wenn der Basisbandprozessor bestimmt, dass die Nachbarzellenstärke über der Schwelle für ein Ereignis eines Hinzufügens einer Zelle ist, der Basisbandprozessor konfiguriert ist, um eine Zeit, um einen Zeitgeber zu triggern, zu starten;
ein Übergabe-Vorhersagerblock konfiguriert ist, um das Flag für eine bevorstehende Übergabe zu setzen, nachdem die Nachbarzellenstärke für ein kontinuierliches Ausmaß der Zeit, um einen Zeitgeber zu triggern, über der Schwelle für ein Ereignis eines Hinzufügens einer Zelle bleibt, wobei das Flag für eine bevorstehende Übergabe anzeigt, dass eine potentielle Übergabe zwischen der mobilen Kommunikationsvorrichtung und der Nachbarzelle bei der Beendigung der Zeit, um einen Zeitgeber zu triggern, gerade dabei sein kann, aufzutreten;
der Anwendungsprozessor weiterhin konfiguriert ist, um zu lesen, ob das Flag für eine bevorstehende Übergabe gesetzt oder gelöscht ist, wobei der Anwendungsprozessor weiterhin konfiguriert ist, um eine Anfrage zum Öffnen einer Datenverbindung unter Verwendung einer Datenverbindungsbenachrichtigung für ein Ausmaß an Zeit von da an zu verzögern, wenn das Flag für eine bevorstehende Übergabe gesetzt ist.

7. Mobile Kommunikationsvorrichtung nach Anspruch 6, wobei das kontinuierliche Ausmaß an Zeit ein vorbestimmter Prozentsatz der Zeit ist, um eine Zeit zu triggern.

8. Mobile Kommunikationsvorrichtung nach Anspruch 6, wobei die Schwelle für ein Ereignis eines Hinzufügens einer Zelle auf einen vorbestimmten Offset unter der Referenzzellenstärke eingestellt ist.

9. Mobile Kommunikationsvorrichtung nach Anspruch 6, wobei das Ausmaß an Zeit von da an, wenn das Flag für eine bevorstehende Übergabe gesetzt ist, so ist, dass der Anwendungsprozessor eine Anfrage zum Öffnen einer Datenverbindung ein Ausmaß an Zeit dazwischen ist, wenn das Flag für eine bevorstehende Übergabe gesetzt und gelöscht ist.

10. Verfahren zum Priorisieren von Übergabebenachrichtigungsnachrichten gegenüber Datenverbindungsbenachrichtigungsnachrichten auf einer Signalisierungsverbindung für ein Teilnehmergerät bzw. UE, das für eine Multi-RAB-Kommunikation konfiguriert ist und einen Basisbandprozessor (206) und einen Anwendungsprozessor (212) umfasst, wobei die Datenverbindungsbenachrichtigung und die Übergabebenachrichtigung einen bestimmten Steuerkanal, DCCH, verwenden, wobei das Verfahren umfasst:
Messen einer Referenzzellenstärke einer Referenzzelle durch den Basisbandprozessor, wobei die Referenzzelle eine aktive Gruppe von Zellen in Kommunikation mit dem UE ist;
Messen einer Nachbarzellenstärke einer Nachbarzelle durch den Basisbandprozessor;
Initiieren einer Übergabezeit, um einen Zeitgeber zu triggern, wenn die Nachbarzellenstärke derart gemessen wird, dass sie größer als eine Schwelle für ein Ereignis eines Hinzufügens einer Zelle ist;
Vorhersagen, durch den Basisbandprozessor vor einer Beendigung der Übergabezeit, um einen Zeitgeber zu triggern, dass eine potentielle Übergabe mit der Nachbarzelle bevorstehend ist;
Setzen eine Flags für eine bevorstehende Übergabe basierend auf der vorhergesagten potentiellen Übergabe;
Verzögern, durch den Anwendungsprozessor, einer Datenverbindungsanfrage auf der Signalisierungsverbindung, um eine Datenverbindung über einen Datenkanal für eine Anwendung zu öffnen, die auf dem Anwendungsprozessor läuft, während das Flag für eine bevorstehende Übergabe gesetzt ist;
potentielles Durchführen einer Übergabebenachrichtigung zwischen dem UE und einer Basisstation auf der Signalisierungsverbindung, während das Flag für eine bevorstehende Übergabe gesetzt ist;
Löschen des Flags für eine bevorstehende Übergabe;
Anfragen, durch den Anwendungsprozessor, einer Anfrage, um die Datenverbindung auf dem Datenkanal zu öffnen, wenn das Flag für eine bevorstehende Übergabe gelöscht ist;
Initiieren, durch den Breitbandprozessor, einer Datenverbindungsbenachrichtigung auf der Signalisierungsverbindung in Antwort auf die Anfrage durch den Anwendungsprozessor.

11. Verfahren nach Anspruch 10, wobei ein Vorhersagen, dass die potentielle Übergabe mit der Nachbarzelle bevorstehend ist, weiterhin umfasst:
Bestimmen, dass die Nachbarzellenstärke für einen vorbestimmten Prozentsatz an Zeit, um eine Zeit zu triggern, kontinuierlich größer als die Schwelle für ein Ereignis eines Hinzufügens einer Zelle ist.

12. Verfahren nach Anspruch 10, wobei ein Löschen des Flags für eine bevorstehende Übergabe ein Löschen des Flags für eine bevorstehende Übergabe umfasst, wenn der Basisbandprozessor misst, dass die Referenzzellensignalstärke vor einer Beendigung der Übergabezeit, um einen Zeitgeber zu triggern, unter die Schwelle für ein Ereignis eines Hinzufügens einer Zelle geht.

13. Verfahren nach Anspruch 10, wobei ein Löschen des Flags für eine bevorstehende Übergabe ein Löschen des Flags für eine bevorstehende Übergabe umfasst, wenn das UE die Übergabe mit der Nachbarzelle beendet.

14. Verfahren nach Anspruch 10, wobei ein Löschen des Flags für eine bevorstehende Übergabe ein Löschen des Flags für eine bevorstehende Übergabe umfasst, nachdem das UE eine Übergabebenachrichtigung auf der Signalisierungsverbindung initiiert und eine Update-Nachricht für eine aktive Gruppe von einer Basisstation empfängt.

15. Verfahren nach Anspruch 10, wobei ein Löschen des Flags für eine bevorstehende Übergabe ein Löschen des Flags für eine bevorstehende Übergabe umfasst, nachdem ein Zeitgeber für ein Flag für eine bevorstehende Übergabe abläuft.

## Revendications

1. Dispositif de communication mobile configuré pour établir la priorité des messages de messagerie de transfert intercellulaire sur les messages de messagerie de connexion de données sur une liaison de signalisation pour le dispositif de communication mobile, et configuré pour communiquer dans des appels multi-RAB, dans lequel la messagerie de connexion de données et la messagerie de transfert intercellulaire utilisent un canal de contrôle dédié, DCCH,
le dispositif de communication mobile comprenant :
un émetteur-récepteur (207) configuré pour communiquer avec une station de base ;
un processeur de bande de base (206) connecté à l'émetteur-récepteur, le processeur de bande de base étant configuré pour définir un indicateur de transfert intercellulaire imminent lorsqu'une intensité de cellule voisine d'une cellule voisine dépasse un seuil d'événement d'ajout de cellule (302) pendant un pourcentage initial prédéterminé d'un temps de délai de déclenchement (306) ;
un processeur d'application (212) configuré pour retarder le lancement d'une demande de connexion de données sur la liaison de signalisation lorsque l'indicateur de transfert intercellulaire imminent est défini et pour permettre le lancement d'une demande de connexion de données lorsque l'indicateur de transfert intercellulaire imminent est effacé.

2. Dispositif de communication mobile selon la revendication 1, dans lequel le processeur de bande de base est en outre configuré pour initier un flux de messagerie de transfert intercellulaire (100) avec la station de base lorsque l'intensité de cellule voisine dépasse un seuil d'événement d'ajout de cellule pendant le temps de délai de déclenchement.

3. Dispositif de communication mobile selon la revendication 1, dans lequel le processeur de bande de base est configuré pour effacer l'indicateur de transfert intercellulaire imminent (a) à la fin d'un transfert intercellulaire potentiel avec la cellule voisine ou (b) lorsque l'intensité de cellule voisine de la cellule voisine chute au-dessous du seuil d'événement d'ajout de cellule avant l'achèvement du temps de délai de déclenchement.

4. Dispositif de communication mobile selon la revendication 1, dans lequel le processeur d'application est configuré pour communiquer un lancement de la demande de connexion de données au processeur de bande de base et le processeur de bande de base est configuré pour initier un flux de messagerie de connexion de données sur une ressource de liaison de signalisation avec une station de base.

5. Dispositif de communication mobile selon la revendication 1, dans lequel le processeur d'application est en outre configuré pour retarder la transmission de messages de coupure de connexion de données pour un canal de données existant lorsque l'indicateur de transfert intercellulaire imminent est défini et pour permettre la transmission de messages de coupure de connexion de données pour le canal de données existant lorsque l'indicateur de transfert intercellulaire imminent est effacé.

6. Dispositif de communication mobile selon la revendication 1, dans lequel :
l'émetteur-récepteur est en outre configuré pour communiquer avec un réseau sans fil sur une liaison de signalisation, la liaison de signalisation étant configurée pour communiquer à la fois la messagerie de transfert intercellulaire et la messagerie de connexion de données ;
le processeur de bande de base est en outre configuré pour mesurer une intensité de cellule de référence (300) d'une cellule de référence, la cellule de référence étant une cellule dans un ensemble actif de cellules en communication avec le dispositif de communication mobile ; le processeur de bande de base étant en outre configuré pour mesurer l'intensité de cellule voisine de la cellule voisine pour déterminer si l'intensité de cellule voisine est au-dessus du seuil d'événement d'ajout de cellule,
lorsque le processeur de bande de base détermine que l'intensité de cellule voisine est au-dessus du seuil d'événement d'ajout de cellule, le processeur de bande de base est configuré pour débuter un temps de délai de déclenchement ;
un bloc de prédicteur de transfert intercellulaire est configuré pour définir l'indicateur de transfert intercellulaire imminent après que l'intensité de cellule voisine est restée au-dessus du seuil d'événement d'ajout de cellule pendant une quantité prédéterminée continue du temps de délai de déclanchement, l'indicateur de transfert intercellulaire imminent indiquant qu'un transfert intercellulaire potentiel entre le dispositif mobile et la cellule voisine peut être sur le point de se produire à la fin du temps de délai de déclanchement ;
le processeur d'application est en outre configuré pour lire si l'indicateur de transfert intercellulaire imminent est défini ou effacé, le processeur d'application étant en outre configuré pour retarder une demande pour ouvrir une connexion de données en utilisant la messagerie de connexion de données pendant un temps à partir de l'instant auquel l'indicateur de transfert intercellulaire imminent est défini.

7. Dispositif de communication mobile selon la revendication 6, dans lequel la quantité de temps prédéterminée continue est un pourcentage prédéterminé du temps de délai de déclenchement.

8. Dispositif de communication mobile selon la revendication 6, dans lequel le seuil d'événement d'ajout de cellule est fixé à un décalage prédéterminé au-dessous de l'intensité de cellule de référence.

9. Dispositif de communication mobile selon la revendication 6, dans lequel la quantité de temps à partir de l'instant auquel l'indicateur de transfert intercellulaire imminent est défini de sorte que le processeur d'application retarde une demande pour ouvrir une connexion de données est une quantité de temps entre l'instant auquel l'indicateur de transfert intercellulaire imminent est défini et l'instant auquel il est effacé.

10. Procédé d'établissement de priorité des messages de messagerie de transfert intercellulaire sur les messages de messagerie de connexion de données sur une liaison de signalisation pour un UE configuré pour une communication multi-RAB et comprenant un processeur de bande de base (206) et un processeur d'application (212), dans lequel la messagerie de connexion de données et la messagerie de transfert intercellulaire utilisent un canal de contrôle dédié, DCCH, le procédé comprenant :
la mesure d'une intensité de cellule de référence d'une cellule de référence par le processeur de bande de base, la cellule de référence étant une cellule dans un ensemble actif de cellules en communication avec l'UE ;
la mesure d'une intensité de cellule voisine d'une cellule voisine par le processeur de bande de base ;
le lancement d'un temps de transfert intercellulaire de délai de déclanchement lorsque l'intensité de cellule voisine est mesurée comme étant supérieure à un seuil d'événement d'ajout de cellule ;
la définition, par le processeur de bande de base avant l'achèvement du temps de transfert intercellulaire pour déclencher le registre d'horloge, qu'un transfert intercellulaire potentiel avec la cellule voisine est imminent ;
le positionnement d'un indicateur de transfert intercellulaire imminent sur la base du transfert intercellulaire potentiel prédit ;
le retardement, par le processeur d'application, d'une demande de connexion de données sur la liaison de signalisation pour ouvrir une connexion de données sur un canal de données pour une application s'exécutant sur le processeur d'application alors que l'indicateur de transfert intercellulaire imminent est positionné ;
l'exécution potentielle d'une messagerie de transfert intercellulaire entre l'UE et une station de base sur la liaison de signalisation alors que l'indicateur de transfert intercellulaire imminent est défini ;
l'effacement de l'indicateur de transfert intercellulaire imminent ;
la demande, par le processeur d'application, de l'ouverture de la connexion de données sur le canal de données lorsque l'indicateur de transfert intercellulaire imminent est effacé ;
le lancement, par le processeur large bande, d'une messagerie de connexion de données sur la liaison de signalisation en réponse à la demande effectuée par le processeur d'application.

11. Procédé selon la revendication 10, dans lequel la prédiction que le transfert intercellulaire potentiel avec la cellule voisine est imminent comprend en outre :
la détermination que l'intensité de cellule voisine est continûment supérieure au seuil d'événement d'ajout de cellule pendant un pourcentage prédéterminé initial du temps de délai de déclenchement.

12. Procédé selon la revendication 10, dans lequel l'effacement de l'indicateur de transfert intercellulaire imminent comprend l'effacement de l'indicateur de transfert intercellulaire imminent lorsque le processeur de bande de base mesure que l'intensité de signal de cellule de référence passe au-dessous du seuil d'événement d'ajout de cellule avant l'achèvement du temps de transfert intercellulaire de délai de déclenchement.

13. Procédé selon la revendication 10, dans lequel l'effacement de l'indicateur de transfert intercellulaire imminent comprend l'effacement de l'indicateur de transfert intercellulaire imminent lorsque l'UE achève le transfert intercellulaire avec la cellule voisine.

14. Procédé selon la revendication 10, dans lequel l'effacement de l'indicateur de transfert intercellulaire imminent comprend l'effacement de l'indicateur de transfert intercellulaire imminent après que l'UE a lancé un message de transfert intercellulaire sur la liaison de signalisation et a reçu un message de mise à jour de définition actif d'une station de base.

15. Procédé selon la revendication 10, dans lequel l'effacement de l'indicateur de transfert intercellulaire imminent comprend l'effacement de l'indicateur de transfert intercellulaire imminent après qu'un temps d'indicateur de transfert intercellulaire imminent est expiré.
